# EUROPEAN PATENT APPLICATION

(11) **EP 4 130 148 A1**
(43) Date of publication of application: **08.02.2023**
(21) Application number: 21774828.4
(22) Date of filing: 26.02.2021
(51) Int. Cl.: C08L 33/06, C08L 33/14, C08L 71/00

(54) **CURABLE COMPOSITION AND CURED PRODUCT**

(30) Priority: 24.03.2020 JP 2020052843
(71) Applicant: Soken Chemical & Engineering Co., Ltd., Toshima-ku Tokyo 171-8531 (JP)
(72) Inventor: GOTO, Shu-ichi, Sayama-shi, Saitama 350-1320 (JP); SHIMIZU, Seiichi, Sayama-shi, Saitama 350-1320 (JP)
(74) Representative: Dehns
(86) International application number: PCT/JP2021/007307
(87) International publication number: WO 2021/192815

(57) **Abstract**

The present invention provides a curable composition that can cure rapidly without using a tin-based curing catalyst and that can form a cured product having excellent mechanical properties, such as elongation at break and breaking strength, and provides a curable composition with high adhesion. A curable composition of the present invention is a curable composition containing a (meth)acrylic polymer (A) which is a polymer of a polymerizable monomer component containing 20% by mass or more of a (meth)acrylic acid alkyl ester (a1) having an alkyl group with 8 to 12 carbon atoms. The (meth)acrylic polymer (A) is a polymer that has a group represented by a specified formula, that contains 1,500 ppm or more of a silicon element, and that has a number average molecular weight (Mn) of more than 10,000.

## Description

### Technical Field

The present invention relates to a curable composition and a cured product.

### Background Art

A polymer having a reactive silicon group in its molecule is known as a composition that is cross-linked and cured by forming a siloxane bond, for example, associated with a hydrolysis reaction of a silyl group by moisture present in the atmosphere or in an adherend. In particular, polymers having a reactive silicon group, such as an alkoxysilyl group, are widely used, for example, as adhesives, sealing materials, or paint in the construction/building material related application and in the automobile related application.

In particular, it is disclosed that a polymer having a reactive silicon group with a specific structure can be used to produce a fast curable composition with high adhesion and storage stability (for example, see Patent Literature 1 to Patent Literature 3).

### Citation List

### Patent Literature

PTL 1: International Publication No. WO 2010/110107
PTL 2: International Publication No. WO 2012/020560
PTL 3: JPA 2014-101499

### Summary of Invention

### Technical Problem

A curable composition containing a polymer having a reactive silicon group in its molecule is often cured with a catalyst, such as a tin-based compound, to promote the curing reaction. However, the use of tin-based compounds is undesirable from the viewpoint of environmental load and toxicity to human body.

Although polymers proposed in Patent Literature 1 to Patent Literature 3 can be used to produce curable compositions with high curability, mechanical properties, such as elongation at break and breaking strength, or adhesion is not satisfactory in some applications.

The present invention provides a curable composition that can cure rapidly without using a tin-based curing catalyst and that can form a cured product having excellent mechanical properties, or provides a curable composition with high adhesion.

### Solution to Problem

The present invention for example relates to the following items [1] to [10].
[1] A curable composition comprising: a (meth)acrylic polymer (A) which is a polymer of a polymerizable monomer component containing 20% by mass or more of a (meth)acrylic acid alkyl ester (a1) having an alkyl group with 8 to 12 carbon atoms, the (meth)acrylic polymer (A) is a polymer that has a group represented by the formula (1), that contains 1,500 ppm or more of a silicon element, and that has a number average molecular weight (Mn) of more than 10,000,

   Formula (1): -X-CH₂-SiR¹₃

   [in the formula (1), R¹ is each independently an alkyl group with 1 to 20 carbon atoms, alkoxy group with 1 to 20 carbon atoms, or hydroxyl group, and at least one R¹ is the alkoxy group or hydroxyl group; X is a divalent group represented by -O-, -COO-, -S-, -N(R²)-, -CH(OH)-CH₂-O-, -O-CO-NH-, or - N(R²)-CO-N(R³)-, R² and R³ are each a hydrogen atom, hydrocarbon group, or halogenated hydrocarbon group, and R² and R³ may be the same or different].
[2] The curable composition according to [1], wherein the (meth)acrylic polymer (A) has a group represented by the formula (1) at least at a molecular chain end thereof.
[3] The curable composition according to [1] or [2], wherein the (meth)acrylic polymer (A) has a glass transition temperature of -20°C or lower.
[4] The curable composition according to any one of [1] to [3], wherein the (meth)acrylic polymer (A) is a polymer of a polymerizable monomer component containing 20% to 85% by mass of the (meth)acrylic acid alkyl ester (a1) having an alkyl group with 8 to 12 carbon atoms and 13% to 60% by mass of a (meth)acrylic acid alkyl ester (a2) having an alkyl group with 13 or more carbon atoms, and the alkyl group of the (meth)acrylic acid alkyl ester (a2) has a branched structure.
[5] The curable composition according to any one of [1] to [4], wherein the curable composition contains a silane coupling agent with a primary amino group in an amount of 0.1 to 10 parts by mass relative to 100 parts by mass of the (meth)acrylic polymer (A).
[6] The curable composition according to any one of [1] to [5], wherein the curable composition contains a tackifier resin with an acid value of 1 mgKOH/g or less in an amount of 1 to 900 parts by mass relative to 100 parts by mass of the (meth)acrylic polymer (A).
[7] The curable composition according to any one of [1] to [6], wherein the curable composition contains a (meth)acrylic polymer (B) with a number average molecular weight (Mn) of less than 10,000 in an amount of 10 to 900 parts by mass relative to 100 parts by mass of the (meth)acrylic polymer (A).
[8] The curable composition according to any one of [1] to [7], wherein the curable composition contains 10 to 900 parts by mass of a polymer (C) having a group represented by the formula (1) and having a polyether skeleton relative to 100 parts by mass of the (meth)acrylic polymer (A).
[9] The curable composition according to any one of [1] to [8], wherein the curable composition contains plastic balloons in an amount of 0.1 to 30 parts by mass relative to 100 parts by mass of the (meth)acrylic polymer (A).
[10] A cured product obtained from the curable composition according to any one of [1] to [9]. Advantageous Effects of Invention

The present invention can provide a curable composition that can cure rapidly without using a tin-based curing catalyst and that can form a cured product having excellent mechanical properties, such as elongation at break and breaking strength, and provide a curable composition with high adhesion.

### Description of Embodiments

The present invention will be specifically described below.

A curable composition of the present invention (hereinafter, may be also referred to as the "composition of the present invention") contains a (meth)acrylic polymer (A) described below.

In the present description, (meth)acrylic is used as a general name of acrylic and methacrylic and may be acrylic or methacrylic, and (meth)acrylate is used as a general name of acrylate and methacrylate and may be acrylate or methacrylate.

### [(Meth)acrylic polymer (A)]

The (meth)acrylic polymer (A) (hereinafter, may also be referred to as the "polymer (A)") is a polymer of a polymerizable monomer component containing 20% by mass or more of a (meth)acrylic acid alkyl ester (a1) having an alkyl group with 8 to 12 carbon atoms and is a polymer with a group represented by the formula (1), with a silicon element content of 1,500 ppm or more, and with a number average molecular weight (Mn) of more than 10,000.

Formula (1): -X-CH₂-SiR¹₃

[in the formula (1), R¹ is each independently an alkyl group with 1 to 20 carbon atoms, alkoxy group with 1 to 20 carbon atoms, or hydroxyl group, and at least one R¹ is the alkoxy group or hydroxyl group; X is a divalent group represented by -O-, -COO-, -S-, -N(R²)-, -CH(OH)-CH₂-O-, -O-CO-NH-, or - N(R²)-CO-N(R³)-, R² and R³ are each a hydrogen atom, hydrocarbon group, or halogenated hydrocarbon group, and R² and R³ may be the same or different].

Examples of the alkyl group with 1 to 20 carbon atoms include linear and branched alkyl groups, such as a methyl group, an ethyl group, an n-propyl group, an isopropyl group, an n-butyl group, an isobutyl group, an n-pentyl group, an isopentyl group, a neopentyl group, an n-hexyl group, a 1-methylpentyl group, a 4-methyl-2-pentyl group, a 3,3-dimethylbutyl group, a 2-ethylbutyl group, an n-heptyl group, a 1-methylhexyl group, an n-octyl group, an isooctyl group, a 1-methylheptyl group, a 2-ethylhexyl group, a 2-propylpentyl group, an n-nonyl group, a 2,2-dimethylheptyl group, a 2,6-dimethyl-4-heptyl group, a 3,5,5-trimethylhexyl group, an n-decyl group, an n-undecyl group, a 1-methyldecyl group, an n-dodecyl group, an n-tridecyl group, a 1-hexylheptyl group, an n-tetradecyl group, an n-pentadecyl group, an n-hexadecyl group, an n-heptadecyl group, an n-octadecyl group, and an n-eicosyl group. An alkyl group with 1 to 10 carbon atoms is preferable, and an alkyl group with 1 to 3 carbon atoms is more preferable. The alkyl group may be linear or branched.

Examples of the alkoxy group with 1 to 20 carbon atoms include linear and branched alkoxy groups, such as a methoxy group, an ethoxy group, an n-propyloxy group, an isopropyloxy group, an n-butyloxy group, an isobutyloxy group, an n-pentyloxy group, an isopentyloxy group, a neopentyloxy group, an n-hexyloxy group, a 1-methylpentyloxy group, a 4-methyl-2-pentyloxy group, a 3,3-dimethylbutyloxy group, a 2-ethylbutyloxy group, an n-heptyloxy group, a 1-methylhexyloxy group, an n-octyloxy group, an isooctyloxy group, a 1-methylheptyloxy group, a 2-ethylhexyloxy group, a 2-propylpentyloxy group, an n-nonyloxy group, a 2,2-dimethylheptyloxy group, a 2,6-dimethyl-4-heptyloxy group, a 3,5,5-trimethylhexyloxy group, an n-decyloxy group, an n-undecyloxy group, a 1-methyldecyloxy group, an n-dodecyloxy group, an n-tridecyloxy group, a 1-hexylheptyloxy group, an n-tetradecyloxy group, an n-pentadecyloxy group, an n-hexadecyloxy group, an n-heptadecyloxy group, an n-octadecyloxy group, and an n-eicosyloxy group. An alkoxy group with 1 to 10 carbon atoms is preferable, and an alkoxy group with 1 to 3 carbon atoms is more preferable. The alkoxy group may be linear or branched.

Examples of the hydrocarbon group in R² and R³ include alkyl groups with 1 to 18 carbon atoms, preferably with 1 to 3 carbon atoms, such as a methyl group, an ethyl group, an n-propyl group, an isopropyl group, an n-butyl group, a sec-butyl group, a tert-butyl group, a 2-ethylhexyl group, an n-octyl group, and an isooctyl group; cycloalkyl groups with 3 to 18 carbon atoms, preferably with 5 to 8 carbon atoms, such as a cyclopentyl group and a cyclohexyl group; alkenyl groups with 2 to 18 carbon atoms, preferably with 2 to 5 carbon atoms, such as a vinyl group, an allyl group, a 3-butenyl group, and a 5-hexenyl group; and aryl groups with 6 to 18 carbon atoms, preferably with 6 to 10 carbon atoms, such as a phenyl group, a naphthyl group, and an anthryl group.

The halogenated hydrocarbon group in R² and R³ is a group in which at least a part of hydrogen atoms constituting the hydrocarbon group is substituted by a halogen atom. Examples of the halogen atom include a fluorine atom, a chlorine atom, a bromine atom, and an iodine atom.

R² and R³ are preferably a hydrogen atom or a hydrocarbon group, more preferably a hydrocarbon group.

Examples of the group represented by -SiR¹₃ include a dimethylmethoxysilyl group, a dimethylethoxysilyl group, a methyldimethoxysilyl group, a methyldiethoxysilyl group, a trimethoxysilyl group, a triethoxysilyl group, a dimethylisopropoxysilyl group, a methyldiisopropoxysilyl group, and a triisopropoxysilyl group.

From the viewpoint of curability and mechanical characteristics, the polymer (A) has a group represented by the formula (1) and has a silicon element content of 1,500 ppm or more, preferably 1,600 to 20,000 ppm, more preferably 1,700 to 10,000 ppm. The term "ppm" refers to "wt ppm". In one embodiment, the polymer (A) preferably has a group represented by the formula (1) at a molecular chain end of the polymer. The silicon element content derived from a group represented by the formula (1) in the polymer (A) can be calculated from the ratio of the components for the preparation and can be measured by ICP spectroscopy. Details are described in Examples.

### <(Meth)acrylic acid alkyl ester (a1)>

The polymer (A) is a polymer of a polymerizable monomer component containing a (meth)acrylic acid alkyl ester (a1) having an alkyl group with 8 to 12 carbon atoms (hereinafter, may also be referred to as the "monomer (a1)"). That is, the polymer (A) has a structural unit derived from the monomer (a1) .

The alkyl group may be linear or branched.

Examples of the monomer (a1) include 2-ethylhexyl (meth)acrylate, n-octyl (meth)acrylate, isooctyl (meth)acrylate, nonyl (meth)acrylate, isononyl (meth)acrylate, n-decyl (meth)acrylate, isodecyl (meth)acrylate, and lauryl (meth)acrylate.

One or two or more monomers (a1) can be used.

The proportion of the monomer (a1) in the polymerizable monomer component constituting the polymer (A) is 20% by mass or more, preferably 20% to 85% by mass, more preferably 20% to 75% by mass, still more preferably 22% to 55% by mass. The polymer (A) can have a structural unit derived from the monomer (a1) in the same range within the entire structural unit. By using the (meth)acrylic acid alkyl ester (a1) having an alkyl group with 8 to 12 carbon atoms in the range described above, it is possible to obtain a (meth)acrylic polymer having excellent mechanical properties.

### <(Meth)acrylic acid alkyl ester (a2)>

The polymer (A) preferably further has a structural unit derived from a (meth)acrylic acid alkyl ester (a2) having an alkyl group with 13 or more carbon atoms (hereinafter, may be also referred to as the "monomer (a2)") in addition to the monomer (a1).

Examples of the monomer (a2) include n-tridecyl (meth)acrylate, isodecyl (meth)acrylate, n-myristyl (meth)acrylate, isomyristyl (meth)acrylate, n-pentadecyl (meth)acrylate, isopentadecyl (meth)acrylate, n-cetyl (meth)acrylate, isocetyl (meth)acrylate, n-heptadecyl (meth)acrylate, isoheptadecyl (meth)acrylate, n-stearyl (meth)acrylate, an isostearyl (meth)acrylate, n-nonadecyl (meth)acrylate, isononadecyl (meth)acrylate, n-eicosyl (meth)acrylate, and isoeicosyl (meth)acrylate. The upper limit of the number of carbon atoms of the alkyl group in the monomer (a2) is preferably 22, for example. In particular, to produce a low-viscosity polymer, the alkyl group in the monomer (a2) preferably has a branched structure.

One or two or more monomers (a2) can be used.

The proportion of the monomer (a2) in the polymerizable monomer component constituting the polymer (A) is preferably 10% by mass or more, more preferably 13% to 60% by mass, still more preferably 15% to 55% by mass. The polymer (A) can have a structural unit derived from the monomer (a2) in the same range within the entire structural unit. By using the (meth)acrylic acid alkyl ester (a2) having an alkyl group with 13 or more carbon atoms in the range described above, it is possible to obtain a (meth)acrylic polymer with high curability.

### <(Meth)acryloyl monomer with hydrolyzable silyl group (a3) >

The polymer (A) preferably further has a structural unit derived from a (meth)acryloyl monomer with a hydrolyzable silyl group (a3) (hereinafter, may be also referred to as the "monomer (a3)") that is copolymerizable with the monomer (a1) and/or the monomer (a2) and that has a group represented by the formula (1).

The monomer (a3) is preferably a compound represented by the formula (a3-1), for example.

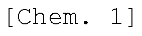

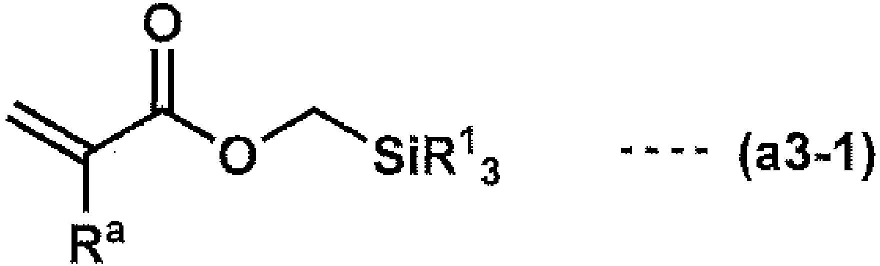

In the formula (a3-1), R^{a} is a hydrogen atom or a methyl group, and R¹ has the same meaning as R¹ in the formula (1) .

Examples of the compound represented by the formula (a3-1) include silane with a (meth)acryloxy group, such as (meth)acryloxymethyldimethylmethoxysilane, (meth)acryloxymethyldimethylethoxysilane, ((meth)acryloxymethyl)methyldimethoxysilane, ((meth)acryloxymethyl)methyldiethoxysilane, (meth)acryloxymethyltrimethoxysilane, and (meth)acryloxymethyltriethoxysilane.

The monomer (a3) may be a compound obtained by adding the isocyanate group of a compound represented by OCN-CH₂-SiR¹₃ (R¹ has the same meaning as the same symbol described in the formula (1)) to the hydroxy group of a hydroxyalkyl (meth)acrylate, such as 2-hydroxyethyl (meth)acrylate or 4-hydroxybutyl (meth)acrylate, or the amino group of an aminoalkyl (meth)acrylate, such as 2-aminoethyl (meth)acrylate. Specific examples of the compound represented by OCN-CH₂-SiR¹₃ are described later.

One or two or more monomers (a3) can be used.

The proportion of the monomer (a3) in the polymerizable monomer component constituting the polymer (A) is preferably 0.01% to 10% by mass, more preferably 0.1% to 5% by mass. The polymer (A) can have a structural unit derived from the monomer (a3) in the same range within the entire structural unit. By using the monomer (a3) in the range described above, the group represented by the formula (1) can be introduced into the polymer (A), and accordingly, the resulting polymer (A) can have appropriate crosslinkability, which is suitable for use in forming a crosslinked product.

### <Another monomer (a4)>

The polymer (A) can further contain a structural unit derived from a monomer (a4) other than the monomer (a1), the monomer (a2), and the monomer (a3) within the range not impairing the object of the present invention.

Examples of the other monomer (a4) include:
(meth)acrylic acid alkyl esters having an alkyl group with 1 to 7 carbon atoms;
(meth)acrylates containing an alicyclic hydrocarbon group or aromatic hydrocarbon group, such as cyclohexyl (meth)acrylate, isobornyl (meth)acrylate, benzyl (meth)acrylate, and phenyl (meth)acrylate;
alkoxyalkyl (meth)acrylates, such as methoxymethyl (meth)acrylate, 2-methoxyethyl (meth)acrylate, 2-ethoxyethyl (meth)acrylate, 3-methoxypropyl (meth)acrylate, 3-ethoxypropyl (meth)acrylate, 4-methoxybutyl (meth)acrylate, and 4-ethoxybutyl (meth)acrylate;
polyalkylene glycol (meth)acrylates, such as methoxypolyethylene glycol mono(meth)acrylate, ethoxypolyethylene glycol mono(meth)acrylate, octoxypolyethylene glycol mono(meth)acrylate, lauroxypolyethylene glycol mono(meth)acrylate, stearoxypolyethylene glycol mono(meth)acrylate, polyethylene glycol mono(meth)acrylate, and polypropylene glycol mono(meth)acrylate;
hydroxyalkyl (meth)acrylates, such as 2-hydroxyethyl (meth)acrylate, 2-hydroxypropyl (meth)acrylate, and 4-hydroxybutyl (meth)acrylate;
(meth)acrylic acid, itaconic acid, crotonic acid, fumaric acid, and maleic acid;
carboxyl group-containing monomers, such as carboxyl group-containing (meth)acrylates, e.g., beta-carboxyethyl (meth)acrylate, 5-carboxypentyl (meth)acrylate, succinic acid mono(meth)acryloyloxyethyl ester, and omega-carboxyl polycaprolactone mono(meth)acrylate;
acid anhydride group-containing monomers, such as phthalic anhydride and maleic anhydride;
dialkylaminoalkyl (meth)acrylates, such as 2-dimethylaminoethyl (meth)acrylate and 2-diethylaminoethyl (meth)acrylate;
amide group-containing monomers, such as (meth)acrylamide; N-alkyl (meth)acrylamides, e.g., N-methyl (meth)acrylamide, N-ethyl (meth)acrylamide, N-propyl (meth)acrylamide, and N-hexyl (meth)acrylamide; and N,N-dialkyl (meth)acrylamides, e.g., N,N-dimethyl (meth)acrylamide and N,N-diethyl (meth)acrylamide;
cyano group-containing monomers, such as (meth)acrylonitrile;
nitrogen heterocycle-containing monomers, such as N-vinylpyrrolidone, N-vinylmorpholine, N-vinylcaprolactam, (meth)acryloylmorpholine, N-cyclohexylmaleimide, N-phenylmaleimide, N-laurylmaleimide, and N-benzylmaleimide;
styrene derivatives, such as styrene, alpha-methylstyrene, p-methylstyrene, p-chlorostyrene, p-chloromethylstyrene, p-methoxystyrene, p-tert-butoxystyrene, divinylbenzene, and indene; and
vinyl ester compounds, such as vinyl acetate, vinyl propionate, vinyl butyrate, vinyl caproate, vinyl benzoate, and vinyl cinnamate.

The (meth)acrylic acid alkyl ester other than the monomer (a1) and the monomer (a2) may be for example a (meth)acrylic acid alkyl ester having an alkyl group usually with 1 to 7, preferably with 2 to 7, more preferably with 3 to 7 carbon atoms. Specific examples thereof include methyl (meth)acrylate, ethyl (meth)acrylate, propyl (meth)acrylate, n-butyl (meth)acrylate, isobutyl (meth)acrylate, and tert-butyl (meth)acrylate. The alkyl group may be linear or branched.

Among the other monomers (a4), (meth)acrylic acid alkyl esters other than the monomer (a1) and the monomer (a2) and polyalkylene glycol (meth)acrylates are preferable, and (meth)acrylic acid alkyl esters other than the monomer (a1) and the monomer (a2) are more preferable.

One or two or more other monomers (a4) can be used.

The proportion of the other monomer (a4) in the polymerizable monomer component constituting the polymer (A) is preferably 1% to 65% by mass, more preferably 5% to 60% by mass. The polymer (A) can have a structural unit derived from the other monomer (a4) in the same range within the entire structural unit.

### <Mercapto group-containing compound (d)>

A mercapto group-containing compound (d) may be used as a chain transfer agent in the production of the polymer (A).

The mercapto group-containing compound (d) has a functional group (-SH) having high chain transfer ability in radical polymerization and therefore serves as a chain transfer agent. When a polymerizable monomer componentization is polymerized in the presence of the mercapto group-containing compound (d) and when a mercapto group-containing compound having a structural unit derived from the mercapto group-containing compound (d), in particular, having a group represented by the formula (1) is used, the group represented by the formula (1) can be introduced into a molecular chain end of the polymer. Furthermore, a group represented by the formula (1) can also be introduced into a polymer with a polymerizable unsaturated group by introducing a mercapto group-containing compound (d) represented by the formula (1) into the polymer by an enethiol reaction. A curable composition in which a polymer (A) having a group represented by the formula (1) at a molecular chain end thereof is used is excellent in terms of curing rate and mechanical properties.

Note that in the case where the monomer (a3) is used, the group represented by the formula (1) in the monomer (a3) and the group represented by the formula (1) in the mercapto group-containing compound (d) may be the same or different.

As the mercapto group-containing compound (d), a compound represented by the formula (d-1) is preferable.

Formula (d-1): HS-CH₂-SiR¹₃

In the formula (d-1), R¹ has the same meaning as R¹ in the formula (1).

Among the mercapto group-containing compounds (d), examples of the compound represented by the formula (d-1) include mercaptomethyldimethylmethoxysilane, mercaptomethyldimethylethoxysilane, mercaptomethyldimethylisopropoxysilane, mercaptomethylmethyldimethoxysilane, mercaptomethylmethyldiethoxysilane, mercaptomethylmethyldiisopropoxysilane, mercaptomethyltrimethoxysilane, mercaptomethyltriethoxysilane, and mercaptomethyltriisopropoxysilane. Among these, mercaptomethyldimethylmethoxysilane, mercaptomethylmethyldimethoxysilane, mercaptomethyltrimethoxysilane, and mercaptomethyltriethoxysilane are preferable. A compound represented by the formula (d-1) can be used to introduce a group represented by the formula (1) into a molecular chain end of the polymer (A).

Examples of other mercapto group-containing compounds (d) include mercapto group-containing compounds, such as n-octyl mercaptan, n-dodecyl mercaptan, tert-dodecyl mercaptan, lauryl mercaptan, and mercaptopropyltrimethoxysilane.

One or two or more compounds (d) can be used.

The mercapto group-containing compound (d) is preferably used in an amount of 0.1 to 5 parts by mass, more preferably 0.2 to 3 parts by mass, relative to a total of 100 parts by mass of the polymerizable monomer component. In such an embodiment, it is possible to adjust the number average molecular weight of the polymer (A) in an appropriate range.

### <Production of polymer (A)>

The polymer (A) can be produced by various polymerization methods, which are not particularly limited, and is preferably produced by the following method, for example. The methods (i) to (iv) may be combined in any way. In the following (i) to (iv), the monomer (a1) may be copolymerized with the monomer (a2).
(i) A method of copolymerizing a monomer (a3) having a polymerizable unsaturated group and a group represented by the formula (1) with a monomer (a1) having the (meth)acrylic structure described above.
(ii) A method of polymerizing a monomer (a1) having a (meth)acrylic structure in the presence of a mercapto group-containing compound (d) having a group represented by the formula (1) as a chain transfer agent.
(iii) A method of reacting a compound having a polymerizable unsaturated group and a reactive functional group (for example, a hydroxy group, an isocyanate group, or an amino group), a polymer having a reactive functional group obtained by copolymerizing a monomer component including a monomer (a1), and a compound (e) having a group that can undergo an addition reaction with the reactive functional group and can introduce a group represented by the formula (1) into the polymer by an addition reaction.

Examples of the compound (e) include compounds represented by the formula (e-1) and the formula (e-2) (hereinafter, may be also referred to as a "compound (e-1)" and a "compound (e-2)", respectively).

Formula (e-1): OCN-CH₂-SiR¹₃

[R¹ has the same meaning as the same symbol in the formula (1).]

Examples of the compound (e-1) include 1-isocyanatomethyldimethylmethoxysilane, 1-isocyanatomethyldimethylethoxysilane, 1-isocyanatomethyldimethylisopropoxysilane, (1-isocyanatomethyl)methyldimethoxysilane, (1-isocyanatomethyl)methyldiethoxysilane, (1-isocyanatomethyl)methyldiisopropoxysilane, 1-isocyanatomethyltrimethoxysilane, 1-isocyanatemethyltriethoxysilane, and 1-isocyanatomethyltriisopropoxysilane. Among these, 1-isocyanatomethyldimethylmethoxysilane, (1-isocyanatomethyl)methyldimethoxysilane, 1-isocyanatomethyltrimethoxysilane, and 1-isocyanatemethyltriethoxysilane are preferable.

Formula (e-2): R⁴-CH₂-SiR¹₃

[R¹ has the same meaning as the same symbol in the formula (1), R⁴ is a glycidyloxy group, an amino group, an alkylamino group, an (aminoalkyl)amino group, an (N,N-dialkylaminoalkyl)amino group, or a halogenated hydrocarbon group.]

Examples of the compound (e-2) include aminomethyltrimethoxysilane, aminomethyltriethoxysilane, (aminoethylamino)methyltrimethoxysilane, (N,N-dimethylamino)ethylaminomethyltrimethoxysilane, and glycidyloxymethyltrimethoxysilane.

One or two or more compounds (e) can be used.

The compound (e) is preferably used in an amount of 0.1 to 5 parts by mass, more preferably 0.2 to 3 parts by mass, relative to a total of 100 parts by mass of the polymerizable monomer component.

(iv) A method of polymerizing a monomer (a1) by a living polymerization method, introducing a functional group, such as an alkenyl group or a hydroxy group, into a molecular chain end, and then reacting the resulting polymer with the compound (d) or the compound (e).

The polymer (A) can be produced by using a known polymerization method, such as cationic polymerization, anionic polymerization, or radical polymerization, as in the methods (i) to (iv). Although the method is not particularly limited, a radical polymerization method is preferable in terms of availability of monomers and industrial productivity. The radical polymerization method may be a living radical polymerization method capable of introducing a specific functional group (for example, a group represented by the formula (1)) at an end or another controlled position or a free radical polymerization method of copolymerizing a predetermined monomer unit using a polymerization initiator.

The living polymerization method may be a living cationic polymerization method, a living anionic polymerization method, or a living radical polymerization method. The living radical polymerization method is preferable in terms of industrial productivity. The living radical polymerization method may be an atom transfer radical polymerization method (ATRP), a reversible addition-fragmentation chain transfer (RAFT) polymerization method, a nitroxide-mediated polymerization method (NMP), an organotellurium-mediated polymerization method (TERP), or an organoiodine-mediated radical polymerization (IRP). A polymer having a functional group at an end thereof can be produced under selected reaction conditions.

In the free radical polymerization method, for example, a reaction vessel is charged with a polymerizable monomer component and, if necessary, a mercapto group-containing compound (d), to which a polymerization initiator is added. A reaction is carried out at a reaction temperature in the range of approximately 40°C to 90°C for 2 to 20 hours. In the reaction, as necessary, a polymerization solvent may be charged. For example, polymerization is carried out in an inert gas atmosphere such as nitrogen gas. Furthermore, during the polymerization reaction, a polymerizable monomer component, a polymerization initiator, a chain transfer agent, and a polymerization solvent may be further added appropriately.

Examples of the polymerization initiator include azo compound-based polymerization initiators, peroxide-based polymerization initiators, and radical photopolymerization initiators. Note that it is preferable not to use a metal catalyst. Since a polymer (A) produced using such a polymerization initiator does not contain a metal component derived from a catalyst, it is possible, for example, to improve inhibition of crosslinking reaction and coloration. Furthermore, since the depolymerization reaction caused by a metal component can be suppressed, a cured product having excellent durability in use in various applications can be provided.

Examples of the azo compound-based polymerization initiator include 2,2'-azobisisobutyronitrile, 2,2'-azobis(4-methoxy-2,4-dimethylvaleronitrile), 2,2'-azobis(2-cyclopropylpropionitrile), 2,2'-azobis(2,4-dimethylvaleronitrile), 2,2'-azobis(2-methylbutyronitrile), 1,1'-azobis(cyclohexane-1-carbonitrile), 2-(carbamoylazo)isobutyronitrile, 2-phenylazo-4-methoxy-2,4-dimethylvaleronitrile, 2,2'-azobis(2-amidinopropane)dihydrochloride, 2,2'-azobis(N,N'-dimethyleneisobutylamidine), 2,2'-azobis[2-methyl-N-(2-hydroxyethyl)-propionamide], 2,2'-azobis(isobutylamide)dihydrate, 4,4'-azobis(4-cyanopentanoic acid), 2,2'-azobis(2-cyanopropanol), dimethyl-2,2'-azobis(2-methylpropionate), and 2,2'-azobis[2-methyl-N-(2-hydroxyethyl)propionamide].

Examples of the peroxide-based polymerization initiator include tert-butyl hydroperoxide, cumene hydroxide, dicumyl peroxide, benzoyl peroxide, lauroyl peroxide, caproyl peroxide, di-i-propyl peroxydicarbonate, di-2-ethylhexyl peroxydicarbonate, tert-butyl peroxypivalate, 2,2-bis(4,4-di-tert-butyl peroxycyclohexyl)propane, 2,2-bis(4,4-di-tert-amyl peroxycyclohexyl)propane, 2,2-bis(4,4-di-tert-octyl peroxycyclohexyl)propane, 2,2-bis(4,4-di-alpha-cumyl peroxycyclohexyl)propane, 2,2-bis(4,4-di-tert-butyl peroxycyclohexyl)butane, and 2,2-bis(4,4-di-tert-octyl peroxycyclohexyl)butane.

The radical photopolymerization initiator is preferably a compound conventionally used as a radical photopolymerization initiator and is, for example, a benzoin-based initiator, such as benzoin, benzoin methyl ether, benzoin ethyl ether, or benzoin propyl ether; an acetophenone-based initiator, such as acetophenone, 2,2-dimethoxy-2-phenylacetophenone, 2,2-diethoxy-2-phenylacetophenone, 1,1-dichloroacetophenone, 2-hydroxy-2-methyl-1-phenyl-propan-1-one, 1-hydroxycyclohexyl phenyl ketone, 2-methyl-1-[4-(methylthio)phenyl]-2-morpholino-propan-1-one, or N,N-dimethylaminoacetophenone; an anthraquinone-based initiator, such as 2-methylanthraquinone, 1-chloroanthraquinone, or 2-amylanthraquinone; a thioxanthone-based initiator, such as 2,4-dimethylthioxanthone, 2,4-diethylthioxanthone, 2-chlorothioxanthone, 2,4-dichlorothioxanthone, 2-isopropylthioxanthone, or 2,4-diisopropylthioxanthone; a ketal-based initiator, such as acetophenone dimethyl ketal or benzyl methyl ketal; a benzophenone-based initiator, such as benzophenone, methylbenzophenone, 4-phenylbenzophenone, 2,4,6-trimethylbenzophenone, 4,4'-dichlorobenzophenone, 4,4'-bisdiethylaminobenzophenone, Michler's ketone, or 4-benzoyl-4'-methyldiphenyl sulfide; an acylphosphine oxide-based initiator, such as 2,4,6-trimethylbenzoyl diphenylphosphine oxide, bis(2,6-dimethoxybenzoyl)-2,4,4'-trimethylpentylphosphine oxide, or bis(2,4,6-trimethylbenzoyl)phenylphosphine oxide; an oxime-ester-based initiator, such as 1-[4-(phenylthio)phenyl]octane-1,2-dione=2-(O-benzoyloxime); camphorquinone, or alpha-hydroxyketone.

These radical photopolymerization initiators may be used alone or in combination.

The radical photopolymerization initiator may be combined with a sensitizer. The sensitizer is preferably, for example, an anthracene-based compound, such as 9,10-dibutoxyanthracene or 9,10-bis(acyloxy)anthracene.

One or two or more polymerization initiators can be used.

The polymerization initiator may be used by being added successively a plurality of times.

The amount of use of the polymerization initiator is usually 0.001 to 2 parts by mass, preferably 0.002 to 1 part by mass relative to 100 parts by mass of the polymerizable monomer component. By using the polymerization initiator in the range described above, it is possible to adjust the number average molecular weight of the polymer (A) in an appropriate range.

As the polymerization solvent, an organic solvent is preferable. Examples of the organic solvent include aromatic hydrocarbons, such as benzene, toluene, and xylene; aliphatic hydrocarbons, such as n-pentane, n-hexane, n-heptane, and n-octane; alicyclic hydrocarbons, such as cyclopentane, cyclohexane, cycloheptane, and cyclooctane; ethers, such as diethyl ether, diisopropyl ether, 1,2-dimethoxyethane, dibutyl ether, tetrahydrofuran, dioxane, anisole, phenyl ethyl ether, and diphenyl ether; halogenated hydrocarbons, such as chloroform, carbon tetrachloride, 1,2-dichloroethane, and chlorobenzene; esters, such as ethyl acetate, propyl acetate, butyl acetate, and methyl propionate; ketones, such as acetone, acetylacetone, methyl ethyl ketone, diethyl ketone, methyl isobutyl ketone, and cyclohexanone; amides, such as N,N-dimethylformamide, N,N-dimethylacetamide, and N-methylpyrrolidone; nitriles, such as acetonitrile and benzonitrile; and sulfoxides, such as dimethyl sulfoxide and sulfolane.

One or two or more polymerization solvents can be used.

The polymerization may also be carried out in the presence of a plasticizer and a polymer (B) described later.

### <Physical properties of polymer (A)>

The number average molecular weight (Mn) of the polymer (A) is more than 10,000, preferably 12,000 or more, more preferably 15,000 or more, in terms of the viscosity of the polymer and the mechanical properties of the resulting cured product, and 60,000 or less, preferably 50,000 or less, more preferably 40,000 or less, in terms of the viscosity of the polymer.

The number average molecular weight (Mn) is measured by a gel permeation chromatography (GPC) method.

The glass transition temperature (Tg) of the polymer (A) is usually -20°C or lower, preferably -80 to -25°C, more preferably -75 to -30°C. Such an embodiment is preferable from the viewpoint of low viscosity and handleability. The Tg is determined by differential scanning calorimetry (DSC).

The details of measurement conditions for GPC and DSC will be described later in Examples.

### <Content of polymer (A)>

The composition of the present invention can contain one or two or more polymers (A).

The composition of the present invention preferably contains 5% by mass or more, more preferably 8% to 95% by mass, still more preferably 10% to 90% by mass, of the polymers (A) in total.

### [(Meth)acrylic polymer (B)]

The composition of the present invention may contain a (meth)acrylic polymer (B) with a number average molecular weight (Mn) of less than 10,000.

The (meth)acrylic polymer (B) (hereinafter, may be also referred to as the "polymer (B)") is preferably a polymer of a polymerizable monomer component containing a (meth)acrylic acid alkyl ester (b1) having an alkyl group with 8 to 12 carbon atoms, preferably a polymer of a polymerizable monomer component further containing a monomer (b2) copolymerizable with the monomer (b1).

### <(Meth)acrylic acid alkyl ester (b1)>

The polymer (B) is preferably a polymer of a polymerizable monomer component containing a (meth)acrylic acid alkyl ester (b1) having an alkyl group with 8 to 12 carbon atoms (hereinafter, may also be referred to as the "monomer (b1)"). The polymer (B) has a structural unit derived from the monomer (b1).

The alkyl group may be linear or branched.

The monomer (b1) may be the same as the monomer (a1).

One or two or more monomers (b1) can be used.

The proportion of the monomer (b1) in the polymerizable monomer component constituting the polymer (B) is preferably 20% by mass or more, more preferably 20% to 99% by mass, still more preferably 20% to 80% by mass, still more preferably 22% to 80% by mass. The polymer (B) can have a structural unit derived from the monomer (b1) in the same range within the entire structural unit.

### <Monomer (b2)>

The polymer (B) can further have a structural unit derived from the monomer (b2) copolymerizable with the monomer (b1) within the range not impairing the object of the present invention.

The monomer (b2) may be the same as the monomer (a2) or the monomer (a4).

Among the monomers (b2), (meth)acrylic acid alkyl esters other than the monomer (b1) and polyalkylene glycol (meth)acrylates are preferable, and (meth)acrylic acid alkyl esters other than the monomer (b1) are more preferable.

One or two or more monomers (b2) can be used.

The proportion of the other monomer (b2) in the polymerizable monomer component is preferably 80% or less by mass, more preferably 1% to 80% by mass, still more preferably 20% to 80% by mass, still more preferably 20% to 78% by mass. The polymer (B) can have a structural unit derived from the other monomer (b2) in the same range within the entire structural unit.

The number average molecular weight (Mn) of the polymer (B) is usually less than 10,000, preferably 500 to 5,000. In particular, a number average molecular weight in the range of 500 to 5,000 is preferable in terms of compatibility with the polymer (A) and the handleability of the curable composition. The number average molecular weight (Mn) is measured by a GPC method.

The glass transition temperature(Tg) of the polymer (B) is preferably -20°C or lower, more preferably -30 to -90°C, still more preferably -40 to -85°C. Such an embodiment is preferable from the viewpoint of excellent mechanical properties at low temperatures. The Tg is determined by differential scanning calorimetry (DSC).

The details of measurement conditions for GPC and DSC will be described later in Examples.

By using the polymer (B) together with the polymer (A), a curable composition having excellent coatability can be obtained, and a cured product having excellent mechanical properties and weatherability can be obtained.

The composition of the present invention can contain one or two or more polymers (B).

The content of the polymer (B) in the composition of the present invention is preferably 10 to 900 parts by mass, more preferably 50 to 200 parts by mass, relative to 100 parts by mass of the polymer (A). Such an embodiment is preferable from the viewpoint of compatibility and viscosity.

### [Polymer (C)]

The composition of the present invention may contain a polymer (C) with a polyether skeleton, if necessary, in addition to the polymer (A). The polymer (C) preferably has a reactive silicon group, particularly a group represented by the formula (1).

The polymer (C) has a polyether skeleton as a main chain skeleton. The polyether skeleton is preferably a polyoxyalkylene skeleton. Examples thereof include a polyoxyethylene skeleton, a polyoxypropylene skeleton, a polyoxybutylene skeleton, a polyoxytetramethylene skeleton, a polyoxyethylene-polyoxypropylene skeleton, and a polyoxypropylene-polyoxybutylene skeleton, and a polyoxypropylene skeleton is preferable. The polyoxyalkylene skeleton may be composed of one repeating unit or two or more repeating units. Here, the repeating unit is an oxyalkylene unit. The polymer (C) may have a urethane skeleton between polyether skeletons.

The number average molecular weight (Mn) of the polymer (C) is preferably 10,000 to 50,000. The number average molecular weight (Mn) satisfying such a condition is preferable from the viewpoint of excellent compatibility with the polymer (A), and excellent handleability and mechanical properties of the curable composition. The number average molecular weight (Mn) is measured by a GPC method.

The details of measurement conditions for GPC will be described later in Examples.

By using the polymer (C) together with the polymer (A), a curable composition having excellent mechanical properties can be obtained.

Note that in the case where the polymer (C) is used, the group represented by the formula (1) in the polymer (A) and the group represented by the formula (1) in the polymer (C) may be the same or different.

In one embodiment, the polymer (C) preferably has a group represented by the formula (1) at a molecular chain end of a polymer, and more preferably has a group represented by the formula (1) at a molecular chain end of a polyether polymer.

The polymer (C) can be obtained, for example, by reacting a terminal hydroxyl group of a polyether polymer with an isocyanate group of the compound (e-1) represented by OCN-CH₂-SiR¹₃ (R¹ has the same meaning as the same symbol in the formula (1)).

The polymer (C) can also be obtained by obtaining a terminal isocyanate group-containing polyether polymer from a polyether polymer and reacting a terminal isocyanate group of the polymer with an amino group of an amino group, an alkylamino group, an (aminoalkyl)amino group, or an (N,N-dialkylaminoalkyl)amino group as R⁴ of the compound (e-2) represented by R⁴-CH₂-SiR¹₃ (R¹ has the same meaning as the same symbol described in the formula (1)). The terminal isocyanate group-containing polyether polymer can be obtained, for example, by urethane reaction between a polyether polymer having a terminal hydroxyl group and a diisocyanate compound. Such a polyether polymer has a urethane skeleton between polyether skeletons.

The polymer (C) can also be obtained by obtaining a terminal amino group-containing polyether polymer from a polyether polymer and reacting a terminal amino group of the polymer with an isocyanate group of the compound (e-1).

Examples of the diisocyanate compound include:
aliphatic diisocyanates with 4 to 30 carbon atoms, such as ethylene diisocyanate, tetramethylene diisocyanate, pentamethylene diisocyanate, hexamethylene diisocyanate, 2-methyl-1,5-pentane diisocyanate, 3-methyl-1,5-pentane diisocyanate, and 2,2,4-trimethyl-1,6-hexamethylene diisocyanate;
alicyclic diisocyanates with 7 to 30 carbon atoms, such as isophorone diisocyanate, cyclopentyl diisocyanate, cyclohexyl diisocyanate, hydrogenated xylylene diisocyanate, hydrogenated tolylene diisocyanate, hydrogenated diphenylmethane diisocyanate, and hydrogenated tetramethylxylylene diisocyanate; and
aromatic diisocyanates with 8 to 30 carbon atoms, such as phenylene diisocyanate, tolylene diisocyanate, xylylene diisocyanate, naphthylene diisocyanate, diphenyl ether diisocyanate, diphenylmethane diisocyanate, and diphenylpropane diisocyanate.

The composition of the present invention can contain one or two or more polymers (C).

The content of the polymer (C) in the composition of the present invention is preferably 10 to 900 parts by mass, more preferably 20 to 800 parts by mass, relative to 100 parts by mass of the polymer (A). Such an embodiment is preferable from the viewpoint of a cured product having excellent mechanical properties.

### [Other components]

The composition of the present invention can contain in addition to the polymer (A), as necessary, one or two or more other components, for example, a plasticizer, a filler, silica, a pigment, an anti-aging agent, a dehydrating agent, a silane coupling agent with an amino group, a curing catalyst, a tackifier resin, a dispersing agent, a rheology control agent, an antifoaming agent, and an adhesion promotor.

### <Plasticizer>

The composition of the present invention can further contain a plasticizer. By using the plasticizer, it is possible to improve flexibility and elongation properties of a cured product formed from the curable composition.

Examples of the plasticizer include phthalic acid esters, such as dimethyl phthalate, diethyl phthalate, dibutyl phthalate, diisobutyl phthalate, dioctyl phthalate, diisodecyl phthalate, butylbenzyl phthalate, and diisononyl phthalate; non-phthalic acid esters, such as 1,2-cyclohexanedicarboxylic acid diisononyl ester and trimellitic acid trioctyl; aliphatic carboxylic acid esters, such as dioctyl adipate, diisodecyl succinate, dibutyl sebacate, and butyl oleate; alcohol esters, such as diethylene glycol dibenzoate, triethylene glycol dibenzoate, and pentaerythritol ester; phosphoric acid esters, such as trioctyl phosphate and tricresyl phosphate; epoxy plasticizers, such as epoxidized soybean oil, dioctyl 4,5-epoxyhexahydrophthalate, and benzyl epoxystearate; chlorinated paraffin; hydrocarbons, such as normal paraffin and isoparaffin; polyethylene glycol and derivatives thereof, polypropylene glycol and derivatives thereof, e.g., polyethers in which the hydroxyl group of polyethylene glycol or polypropylene glycol is sealed with an alkyl ether, oligomers of polystyrene such as poly-alpha-methylstyrene and polystyrene, oligomers such as polybutadiene, butadiene-acrylonitrile copolymers, polychloroprene, polyisoprene, polybutene, hydrogenated polybutene, and epoxidized polybutadiene, and polymer plasticizers such as (meth)acrylic polymers other than the polymer (A).

One or two or more plasticizers can be used.

In one embodiment, from the viewpoint of coatability of the curable composition and weatherability of a cured product, the content of the plasticizer in the composition of the present invention is preferably 10 to 400 parts by mass, more preferably 50 to 300 parts by mass, relative to 100 parts by mass of the polymer component. The polymer component may contain the polymer (B) in addition to the polymer (A).

### <Filler>

The composition of the present invention can further contain a filler.

Examples of the filler include calcium carbonates, such as heavy calcium carbonate, light calcium carbonate, colloidal calcium carbonate, semi-colloidal calcium carbonate, ultrafine calcium carbonate, and these calcium carbonates whose surfaces are surface-treated with a fatty acid or resin acid-based organic substance; carbon black; magnesium carbonate; diatomite; calcined clay; clay; talc; titanium oxide; bentonite; ferric oxide; zinc oxide; active zinc white; aluminum hydroxide; inorganic hollow bodies, such as shirasu balloons, perlite, glass balloons, fly ash balloons, alumina balloons, zirconia balloons, and carbon balloons; organic resin hollow bodies (plastic balloons), such as phenolic resin balloons, epoxy resin balloons, urea resin balloons, polyvinylidene chloride resin balloons, polyvinylidene chloride-(meth)acrylic resin balloons, polystyrene balloons, polymethacrylate balloons, polyvinyl alcohol balloons, styrene-(meth)acrylic resin balloons, and polyacrylonitrile balloons; powdery fillers, such as resin beads, wood flour, pulp, cotton chips, mica, walnut shell flour, rice hull flour, graphite, aluminum fine powder, and flint powder; and fibrous fillers, such as glass fibers, glass filaments, carbon fibers, Kevlar fibers, and polyethylene fibers. Among these, calcium carbonates surface-treated with a fatty acid are preferable from the viewpoint of dispersibility, and plastic balloons, such as polystyrene balloons, are preferable from the viewpoint of a lower specific gravity or heat-insulating properties.

One or two or more fillers can be used.

The content of the filler in the composition of the present invention is preferably 0.1 to 1,000 parts by mass, more preferably 0.1 to 500 parts by mass, relative to 100 parts by mass of the polymer (A). In one embodiment, the content of the plastic balloons in the composition of the present invention is preferably 0.1 to 30 parts by mass, more preferably 1 to 10 parts by mass, relative to 100 parts by mass of the polymer (A). In the present invention, it is possible to obtain a curable composition having excellent filler dispersibility.

### <Silica>

The composition of the present invention can further contain silica. By using silica, coatability of the curable composition is improved, and it is possible to obtain a cured product having excellent weatherability and elongation properties.

An example of silica is fumed silica. Other examples of silica include hydrophobic silica and hydrophilic silica, and hydrophobic silica is preferable.

One or two or more types of silica can be used.

In one embodiment, the content of silica in the composition of the present invention is preferably 1 to 100 parts by mass, more preferably 3 to 50 parts by mass, relative to 100 parts by mass of the polymer (A).

### <Pigment>

The composition of the present invention can further contain a pigment.

Examples of the pigment include inorganic pigments, such as iron oxide, chromium oxide, titanium oxide, and cobalt aluminate; and organic pigments, such as phthalocyanine blue and phthalocyanine green. Use of the pigment is preferable from the viewpoint of improving toning and weatherability.

One or two or more pigments can be used.

In one embodiment, the content of the pigment in the composition of the present invention is preferably 1 to 200 parts by mass, more preferably 3 to 100 parts by mass, relative to 100 parts by mass of the polymer (A).

### <Anti-aging agent>

The composition of the present invention can further contain an anti-aging agent, such as an ultraviolet absorber, a light stabilizer, and an antioxidant.

Examples of the ultraviolet absorber include a benzotriazole-based ultraviolet absorber and a benzophenone-based ultraviolet absorber, and a benzotriazole-based ultraviolet absorber is preferable. Examples of the benzotriazole-based ultraviolet absorber include 2-(2-hydroxy-5-tert-butylphenyl)-2H-benzotriazole, 2-(2H-benzotriazol-2-yl)-4,6-bis(1-methyl-1-phenylethyl)phenol, 2-(2H-benzotriazol-2-yl)-6-(1-methyl-1-phenylethyl)-4-(1,1,3,3-tetramethylbutyl)phenol, a reaction product of methyl 3-(3-(2H-benzotriazol-2-yl)-5-tert-butyl-4-hydroxyphenyl)propionate and polyethylene glycol, and 2-(2H-benzotriazol-2-yl)-p-cresol.

Examples of the light stabilizer include a hindered amine-based light stabilizer. Examples of the hindered amine-based light stabilizer include bis(1,2,2,6,6-pentamethyl-4-piperidyl) sebacate, methyl(1,2,2,6,6-pentamethyl-4-piperidyl) sebacate, decanedioic acid bis(2,2,6,6-tetramethyl-1-(octyloxy)-4-piperidinyl)ester, bis(1,2,2,6,6-pentamethyl-4-piperidinyl) sebacate, and 2,4-bis[N-butyl-N-(1-cyclohexyloxy-2,2,6,6-tetramethylpiperidin-4-yl)amino]-6-(2-hydroxyethylamine)-1,3,5-triazine).

Examples of the antioxidant include a hindered phenol-based antioxidant, a monophenol-based antioxidant, a bisphenol-based antioxidant, a polyphenol-based antioxidant, and a phosphorus-based antioxidant.

One or two or more anti-aging agents can be used.

In one embodiment, the content of the anti-aging agent in the composition of the present invention is preferably 0.05 to 20 parts by mass, more preferably 0.1 to 10 parts by mass, relative to 100 parts by mass of the polymer (A).

### <Dehydrating agent>

In order to further improve storage stability, the composition of the present invention can contain a small amount of a dehydrating agent within a range that does not adversely affect curability and flexibility.

Examples of the dehydrating agent include hydrolyzable organosilicon compounds, such as methyltrimethoxysilane, methyltriethoxysilane, tetramethoxysilane, tetraethoxysilane, dimethyldimethoxysilane, phenyltrimethoxysilane, diphenyldimethoxysilane, and vinyltrimethoxysilane; alkyl orthoformates, such as methyl orthoformate and ethyl orthoformate; alkyl orthoacetates, such as methyl orthoacetate and ethyl orthoacetate; and isocyanate compounds, such as p-toluenesulfonyl isocyanate.

In one embodiment, from the viewpoint of storage stability and curability of the curable composition, the content of the dehydrating agent in the composition of the present invention is preferably 0.1 to 20 parts by mass, more preferably 1 to 10 parts by mass, relative to 100 parts by mass of the polymer component. The polymer component may contain the polymer (B) and the polymer (C) in addition to the polymer (A).

### <Silane coupling agent with amino group>

The composition of the present invention can further contain a silane coupling agent with an amino group (hereinafter referred to simply as an "amino silane coupling agent") from the viewpoint of curability.

The amino silane coupling agent means a compound having, in one molecule, a silicon atom bonded to an alkoxy group and a functional group containing a nitrogen atom. The amino silane coupling agent serves as a catalytic promoter that promotes moisture curing and further can improve adhesion of the resulting cured product.

Examples of the amino silane coupling agent include 3-aminopropyltrimethoxysilane, 3-aminopropylmethyldimethoxysilane, 3-aminopropyltriethoxysilane, N-(2-aminoethyl)-aminomethyltrimethoxysilane, N-(2-aminoethyl)-aminomethyltriethoxysilane, N-(2-aminoethyl)-3-aminopropyltrimethoxysilane, N-(2-aminoethyl)-3-aminopropyltriethoxysilane, N-phenyl-3-aminopropyltrimethoxysilane, N-butyl-3-aminopropyltrimethoxysilane, and bis(3-(trimethoxysilyl)propyl)amine.

Among these amino silane coupling agents, silane coupling agents with a primary amino group are particularly preferably used from the viewpoint that the curing rate can be increased.

One or two or more amino silane coupling agents can be used.

In one embodiment, from the viewpoint of adhesion, storage stability, and handleability of the curable composition, the content of the amino silane coupling agent in the composition of the present invention is preferably 0.1 to 10 parts by mass, more preferably 0.5 to 10 parts by mass, relative to 100 parts by mass of the polymer (A).

### <Tackifier resin>

The composition of the present invention can further contain a tackifier resin.

A cured product containing a tackifier resin can provide an adhesive layer with appropriate tackiness and high shear strength.

Examples of the tackifier resin include rosin-based tackifier resins, such as rosin ester-based resins, terpene-based tackifier resins, such as terpene phenolic resins, styrene-based tackifier resins, and alicyclic saturated hydrocarbon resins.

The rosin ester-based resins are resins obtained by esterification of a rosin-based resin with an alcohol. Examples of the rosin-based resins include rosin resins, disproportionated rosin resins, and hydrogenated rosin resins composed mainly of a resin acid, such as abietic acid, and dimers (polymerized rosin resins) of a resin acid, such as abietic acid. Examples of the alcohol include polyhydric alcohols, such as ethylene glycol, glycerin, and pentaerythritol.

A resin produced by esterification of a rosin resin is a rosin ester resin, a resin produced by esterification of a disproportionated rosin resin is a disproportionated rosin ester resin, a resin produced by esterification of a hydrogenated rosin resin is a hydrogenated rosin ester resin, and a resin produced by esterification of a polymerized rosin resin is a polymerized rosin ester resin.

The terpene phenolic resin is a resin produced by polymerizing terpene in the presence of phenol.

Examples of the disproportionated rosin ester resin include Super Ester A75 (10 or less), Super Ester A100 (10 or less), Super Ester A115 (20 or less), and Super Ester A125 (20 or less). Examples of the polymerized rosin ester resin include Pensel D-125 (10 to 16), Pensel D-135 (10 to 16), and Pensel D-160 (10 to 16). These products are manufactured by Arakawa Chemical Industries, Ltd., and the figures in parentheses are acid values (mgKOH/g).

Examples of terpene-based tackifier resins include YS Polyster T30 (1 or less), YS Polyster T80 (1 or less), YS Polyster T130 (1 or less), Clearon 100 (1 or less), and Clearon 110 (1 or less). These products are manufactured by Yasuhara Chemical Co., Ltd., and the figures in parentheses are acid values (mgKOH/g).

Examples of the styrene-based tackifier resins include FMR-0150 (0.1 or less), FTR-6100 (0.1 or less), FTR-6110 (0.1 or less), FTR-6125 (0.1 or less), FTR-7100 (0.1 or less), FTR-8120 (0.1 or less), FTR-0100 (0.1 or less), FTR-2120 (0.1 or less), and FTR-2140 (0.1 or less). These products are manufactured by Mitsui Chemicals, Inc., and the figures in parentheses are acid values (mgKOH/g). SX-100 (1 or less) manufactured by Yasuhara Chemical Co., Ltd. may also be used.

Examples of the alicyclic saturated hydrocarbon resins include Arkon P-90, Arkon P-100, Arkon P-115, Arkon P-125, Arkon M-90, Arkon M-100, Arkon M-115, and Arkon M-135. These products are manufactured by Arakawa Chemical Industries, Ltd.

The tackifier resins may be used alone or in combination.

Among these, from the viewpoint of storage stability of the curable composition, tackifier resins with an acid value of 1 mgKOH/g or less are preferable, and an acid value of 0.1 mgKOH/g or less is particularly preferable. The use of a tackifier resin with an acid value of 0.1 mgKOH/g or less can provide a curable composition particularly with high storage stability. The acid value refers to the milligrams of potassium hydroxide required to neutralize 1 g of a tackifier resin and can be measured in accordance with JIS K0070.

The composition of the present invention preferably contains 1 to 900 parts by mass, more preferably 5 to 500 parts by mass, of a tackifier resin relative to 100 parts by mass of the polymer (A). In such an embodiment, the adhesive layer has appropriate tackiness and high adhesive strength to various adherends.

### <Rheology control agent>

The composition of the present invention can further contain a rheology control agent. The rheology control agent can improve the smoothness of a film surface. The rheology control agent may be an acrylic, urea, urethane, amide, polyester, or layered inorganic compound rheology control agent. Among these, polyesters exemplified by "BYK R606 (polyhydroxycarboxylic acid ester)" manufactured by BYK Japan KK. are preferable.

The composition of the present invention preferably contains 0.1 to 10 parts by mass, more preferably 0.2 to 5 parts by mass, of a rheology control agent relative to 100 parts by mass of the polymer (A). Such an embodiment can provide a curable composition with excellent thixotropy and pseudoplasticity.

### [Application of curable composition, cured product]

The composition of the present invention has excellent storage stability because of good compatibility between the polymer (A) and the polymer (B) and/or the polymer (C) and also has excellent coatability due to its high thixotropy. Furthermore, a cured product obtained from the composition has excellent mechanical properties such as elongation at break and breaking strength.

The composition of the present invention has good crosslinkability and therefore can be used for, for example, application where it is cured by crosslinking or application where elasticity of a cured body is utilized. In the composition, it is considered that, for example, the group represented by the formula (1) of the polymer (A) and, if used, the group represented by the formula (1) of the polymer (C) are hydrolyzed by moisture present in the atmosphere or in an adherend to which the curable composition is applied to form silanol groups, and then silanol groups undergo dehydration condensation to form siloxane bonds, resulting in curing to form a cured product.

The composition of the present invention is suitably used, for example, as sealing materials, adhesives, hot-melt adhesives, or paint in the construction/building material application and in the automobile application. Other examples include coating materials for covering surfaces of inorganic materials (e.g., cement, mortar, metal, and glass), compositions for forming sheets (examples of sheets: air-permeable sheets, protective sheets, water-impermeable sheets, damping sheets, transfer sheets, dimming sheets, antistatic sheets, conductive sheets, curing sheets, sound-insulating sheets, light-shielding sheets, decorative sheets, marking sheets, and flame-retardant sheets), compositions for forming films (examples of films: marking films, protective films, ink fixing films, and laminate films), compositions for forming foams (examples of foams: rigid foams, flexible foams, semi-rigid foams, and flame-retardant foams), damping materials, sound-insulating materials, soundproof materials, sound-absorbing materials, artificial leather, artificial skin, synthetic leather, various industrial parts, daily necessities, compositions for forming molded articles for toiletries, vehicles for paint, resins for primers, and various binders (e.g., binders for ink, binders for magnetic recording media, binders for casting, binders for fired products, and binders for glass fiber sizing materials).

A cured product of the present invention is obtained from a composition of the present invention. Although curing conditions are not particularly limited, when the composition of the present invention is applied onto a support and, for example, left to stand under the environment of 10 to 80°C and 20 to 90% RH, preferably under the environment of 20 to 70°C and 30 to 80% RH, for a predetermined time, curing can be carried out satisfactorily.

### EXAMPLES

The present invention will be described in more detail below on the basis of Examples. However, the present invention is not limited to these examples. In the following descriptions, for example, in Examples and Comparative Examples, "part" refers to "part by mass" unless otherwise noted.

### [Measurement methods for polymers]

Evaluation methods for physical properties of polymers will be described below.

### <Number average molecular weight (Mn) and weight average molecular weight (Mw)>

The number average molecular weight (Mn) and the weight average molecular weight (Mw) of each polymer were analyzed by a gel permeation chromatography (GPC) method and calculated in terms of polystyrene under the following conditions.
- Apparatus: GPC-8220 (manufactured by Tosoh Corporation)
- Column: G7000HXL/7.8 mm ID x 1 piece +
   GMHXL/7.8 mm ID x 2 pieces +
   G2500HXL/7.8 mm ID x 1 piece
- Medium: tetrahydrofuran
- Flow rate: 1.0 mL/min
- Concentration: 1.5 mg/ml
- Injection volume: 300 micro L
- Column temperature: 40°C

### <Glass transition temperature (Tg)>

The glass transition temperature (Tg) of each polymer was measured with a differential scanning calorimeter (DSC).
- Apparatus: DSC7000X (manufactured by Hitachi High-Tech Science Corporation)
- Temperature conditions: raised from -100°C to 30°C at 10°C/min
- Sample container: open cell made of aluminum
- Amount of sample: 5 mg

### <Silicon element content>

The silicon element content of each polymer was measured with an inductively coupled plasma-atomic emission spectrometry apparatus (ICP-AES) by adding 7 mL of a mixed acid containing hydrogen fluoride to 0.2 g of the polymer, wet-ashing the mixture in a microwave decomposition apparatus (manufactured by Antor Japan), and adding ultrapure water to the ashed sample to make a constant volume of 50 mL.
- Apparatus: ICPE-9000 (manufactured by Shimadzu Corporation)
- High-frequency power: 1.20 kW
- Plasma gas: 10.00 L/min
- Auxiliary gas: 0.60 L/min
- Carrier gas: 0.70 L/min
- Observation direction: axial direction

### [Production Example A1]

100 parts of ethyl acetate was charged into a stainless steel flask equipped with a stirrer, a nitrogen gas introduction tube, a thermometer, and a reflux condenser tube. Nitrogen purge was performed, and then the temperature was increased to 70°C. Next, while maintaining the contents in the flask at 70°C, 0.1 parts of 2,2'-azobisisobutyronitrile (AIBN) was added. A liquid mixture of 25 parts of 2-ethylhexyl acrylate, 25 parts of isostearyl acrylate, 49 parts of butyl acrylate, 1 part of acryloxymethyltrimethoxysilane, and 1 part of mercaptomethyltrimethoxysilane was added for one hour at a constant rate. If necessary, 0.05 parts of AIBN was added. After the addition of the liquid mixture was completed, the temperature was increased for a reaction for 6 hours under reflux. Volatile components were distilled off under reduced pressure, and a (meth)acrylic polymer (A-1) was obtained. The polymer (A-1) had a silicon element content of 2,680 ppm, Mn of 22,000, Mw of 52,000, and Tg of -66°C.

### [Production Example A2, A5 to A8, cA1 to cA3, B1, B2]

(Meth)acrylic polymers (A-2), (A-5) to (A-8), (cA-1), (cA-2), (cA-3), (B-1), and (B-2) were obtained as in Production Example A1 except that the raw material components used were changed as shown in Table 1.

### [Production Example A3]

25 parts of 2-ethylhexyl acrylate, 25 parts of isostearyl acrylate, 50 parts of butyl acrylate, and 2 parts of bis[4-{ethyl-(2-hydroxyethyl)aminocarbonyl}-benzyl]trithiocarbonate (manufactured by Nippon Terpene Chemicals, Inc.) were charged into a stainless steel flask equipped with a stirrer, a nitrogen gas introduction tube, a thermometer, and a reflux condenser tube. Nitrogen purge was performed, and then the temperature was increased to 80°C. 0.03 parts of AIBN was added to the flask while stirring, and the temperature of the contents of the flask was maintained at 80°C by heating and cooling for 6 hours. Then, 1.3 parts of isocyanatomethyltrimethoxysilane was charged and reacted at 60°C for 12 hours. Disappearance of a peak derived from the isocyanate group was confirmed by FT-IR. Volatile components were distilled off under reduced pressure, and a (meth)acrylic polymer (A-3) was obtained. The polymer (A-3) has a silicon element content of 1,920 ppm, Mn of 16,000, Mw of 18,000, and Tg of -69°C.

### [Production Example A4]

12.5 parts of 2-ethylhexyl acrylate, 12.5 parts of isostearyl acrylate, and 25 parts of butyl acrylate were charged into a stainless steel flask equipped with a stirrer, a nitrogen gas introduction tube, a thermometer, and a reflux condenser tube. Nitrogen purge was performed, and then the temperature was increased to 80°C. 0.84 parts of copper (I) bromide, 8.8 parts of acetonitrile and 1.8 parts of an initiator diethyl 2,5-dibromoadipate were charged. After the temperature of the liquid mixture was adjusted to approximately 80°C, 0.018 parts of pentamethyldiethylenetriamine was added to start a polymerization reaction. A liquid mixture of 12.5 parts of 2-ethylhexyl acrylate, 12.5 parts of isostearyl acrylate, and 25 parts of butyl acrylate was successively added. The temperature of the contents of the flask was maintained at 80°C by heating and cooling. Pentamethyldiethylenetriamine was added as required until the non-volatile content reached 95% or more. Volatile components were then distilled off under reduced pressure. Then, 21 parts of 1,7-octadiene and 35 parts of acetonitrile were added, and 0.34 parts of pentamethyldiethylenetriamine was added. While the temperature of the contents of the flask was maintained at 80°C, a reaction was carried out for 6 hours to introduce octadiene into an end of the polymer. 120 parts of butyl acetate was added, a filter aid was added and stirred, and then insoluble catalyst components were removed by filtration. An adsorbent was then added. After heating and stirring at 100°C for one hour, insoluble components were removed by filtration to remove the catalyst. Furthermore, volatile components were distilled off under reduced pressure to obtain a polymer having an alkenyl group at both ends. 1.2 parts of mercaptomethyltrimethoxysilane was added to the polymer with the terminal alkenyl groups and was heated to 80°C. 0.1 parts of AIBN was added thereto and was stirred at 80°C for 3 hours. After complete disappearance of peaks derived from the alkenyl group and the mercapto group of the raw material was confirmed by ¹H-NMR measurement, volatile components were distilled off under reduced pressure to obtain a (meth)acrylic polymer (A-4). The polymer (A-4) had a silicon element content of 1,880 ppm, Mn of 23,000, Mw of 29,000, and Tg of -67°C.

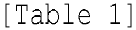

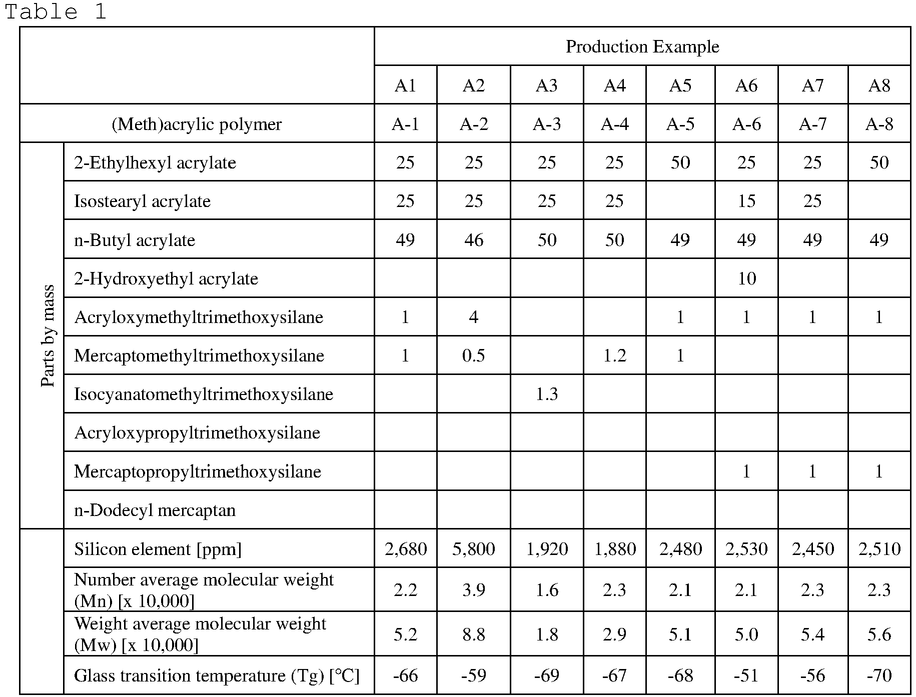

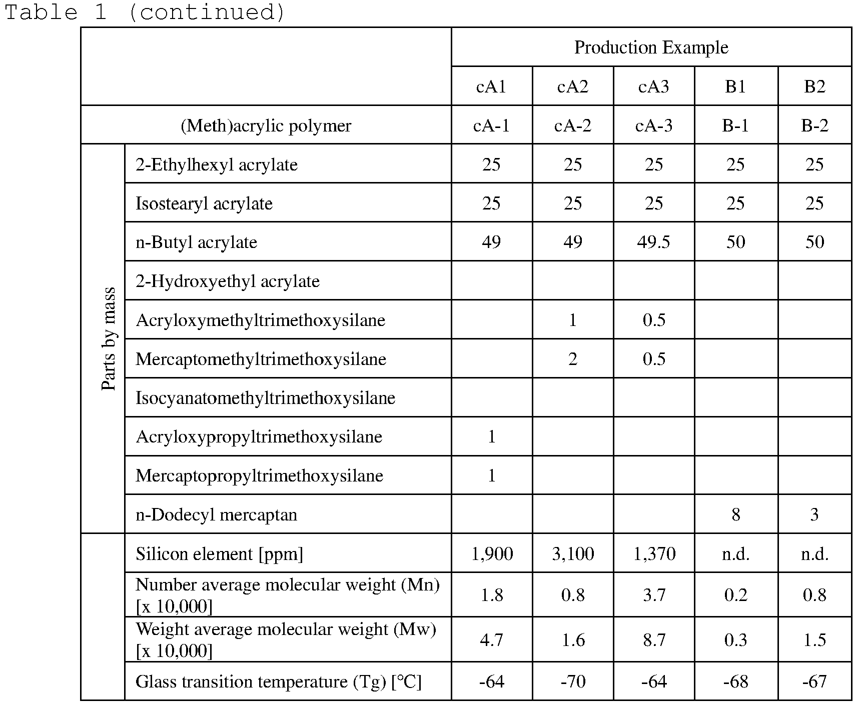

In Table 1, "n.d." indicates below the lower limit of quantitation.

### [Example 1]

50 parts of the (meth)acrylic polymer (A-1), 50 parts of a polyether with a silane group "GENIOSIL (registered trademark) STP-E30" (manufactured by WACKER)) as the polymer (C), and 100 parts of a plasticizer "DIDP" (manufactured by J-PLUS Co., Ltd.) were mixed with a planetary centrifugal mixer (ARE-310, manufactured by THINKY Corporation) at a revolution speed of 2,000 rpm for one minute. A curable composition was then obtained by mixing 87.2 parts of light calcium carbonate "Hakuenka CCR" (manufactured by Shiraishi Kogyo Kaisha, Ltd.; filler), 87.2 parts of heavy calcium carbonate "Whiton 305" (manufactured by Shiraishi Kogyo Kaisha, Ltd.; filler), 8 parts of fumed silica "HDK H18" (manufactured by Wacker Asahikasei Silicone), 8 parts of a white pigment "Tipaque PFC105" (manufactured by Ishihara Sangyo Kaisha, Ltd.), 0.7 parts of an ultraviolet absorber "Tinuvin 1130" (manufactured by BASF), 0.7 parts of a light stabilizer "Tinuvin 292" (manufactured by BASF), 8 parts of a dehydrating agent "Silquest A-171" (manufactured by Momentive), and 4 parts of N-(2-aminoethyl)-3-aminopropyltrimethoxysilane "Silquest A-1122" (manufactured by Momentive) in the ARE-310 (manufactured by THINKY Corporation) at a revolution speed of 2,000 rpm for 2 minutes.

Various evaluations were performed on the resulting curable composition.

### [Examples 2 to 6, Comparative Examples 1 to 3]

Curable compositions were obtained as in Example 1 except that compounding components were changed as shown in Table 2, and various evaluations were performed. Evaluation methods will be described below.

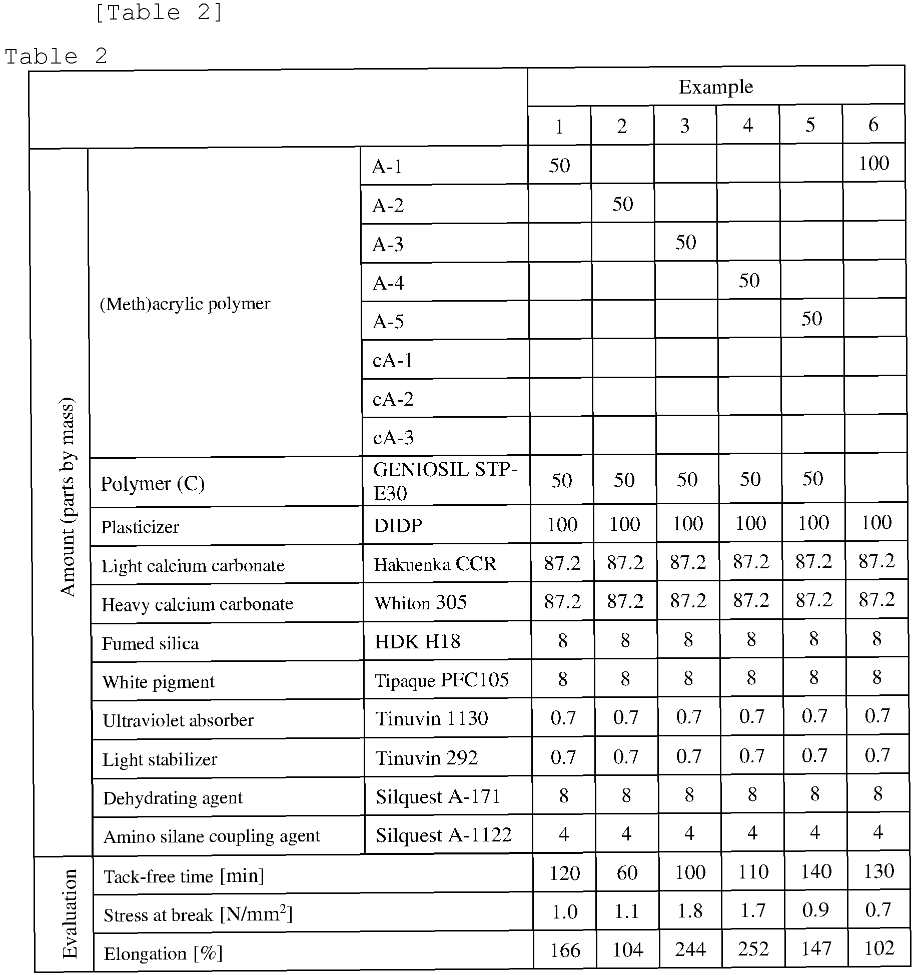

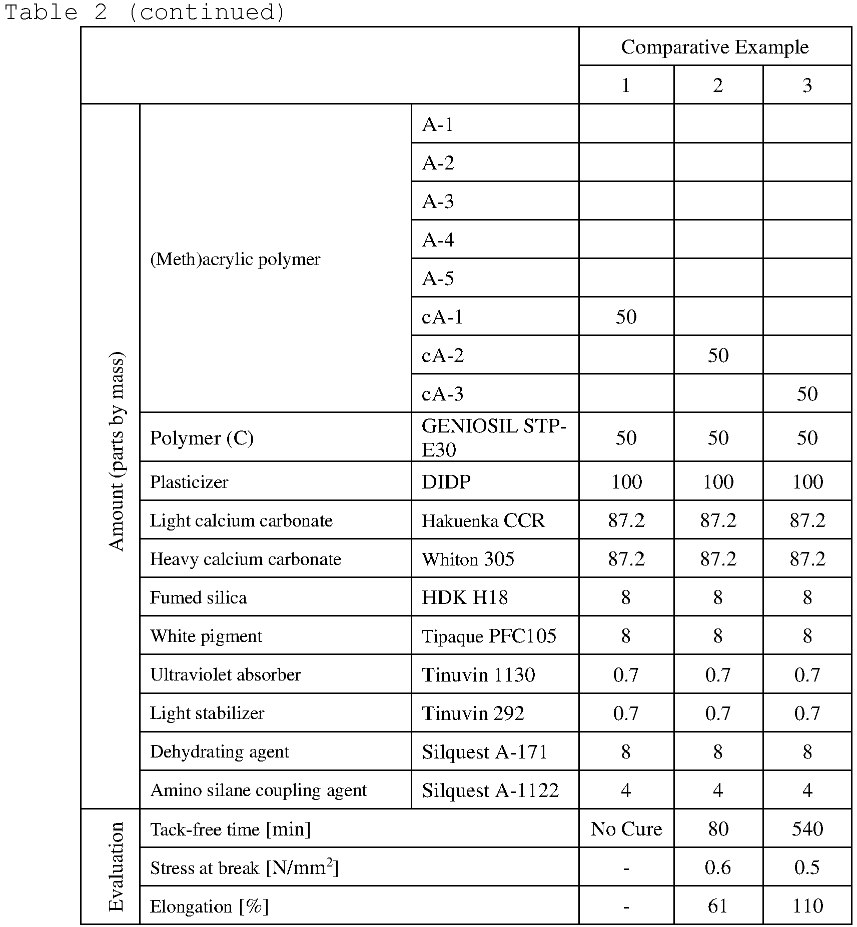

In Table 2, "No Cure" indicates that the composition was not cured. The same applies to the following.

### [Example 7]

100 parts of the (meth)acrylic polymer (A-1) and 170 parts of the (meth)acrylic polymer (B-1) were mixed in the ARE-310 at a revolution speed of 2,000 rpm for one minute. A curable composition was then obtained by mixing 350 parts of heavy calcium carbonate "Imercarb 200" (manufactured by IMERYS, filler), 10 parts of fumed silica "HDK H18" (manufactured by Wacker Asahikasei Silicone), 1 part of a rheology control agent "BYK R606" (manufactured by BYK Japan KK), 8 parts of the dehydrating agent "Silquest A-171" (manufactured by MOMENTIVE), and 6 parts of N-2-(aminoethyl)-3-aminopropyltrimethoxysilane "Silquest A-1122" (manufactured by MOMENTIVE) in the ARE-310 at a revolution speed of 2,000 rpm for 2 minutes.

Various evaluations were performed on the resulting curable composition.

### [Examples 8 to 15, Comparative Examples 4 to 6]

Curable compositions were obtained as in Example 7 except that compounding components were changed as shown in Table 3, and various evaluations were performed. Evaluation methods will be described below.

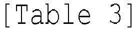

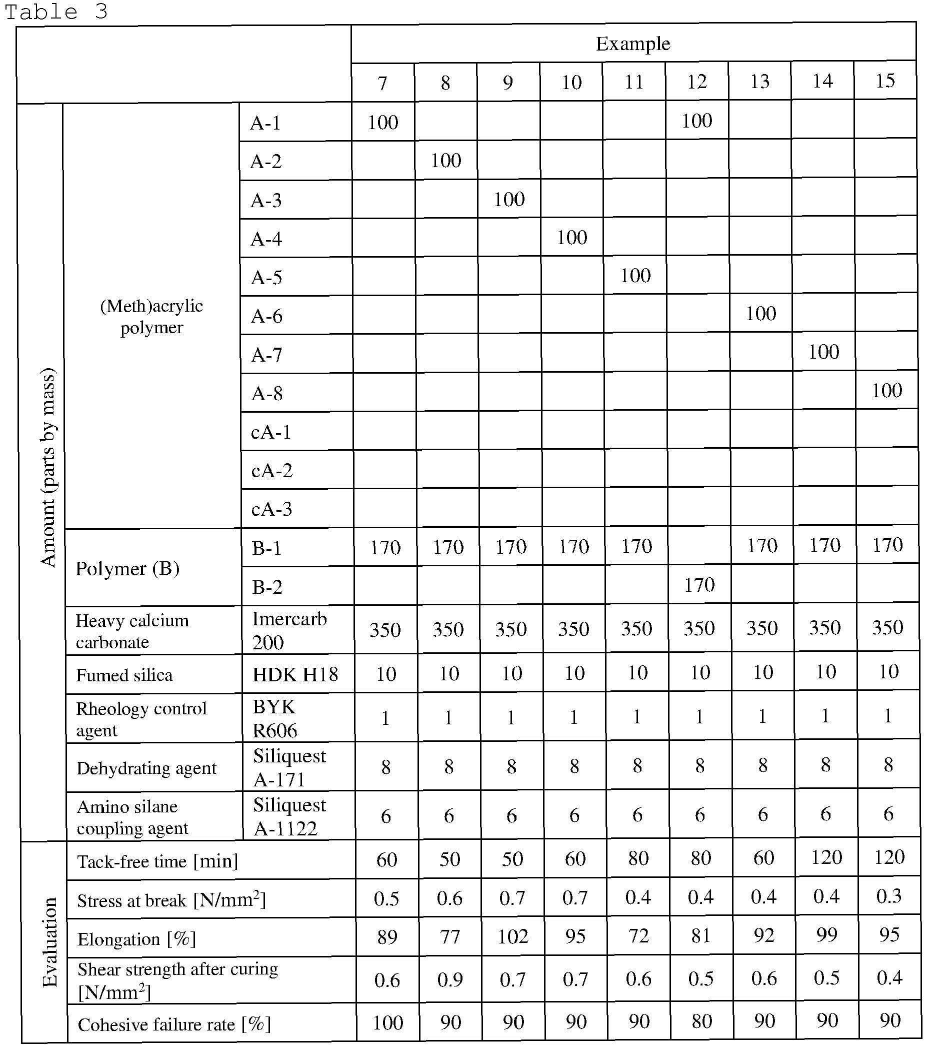

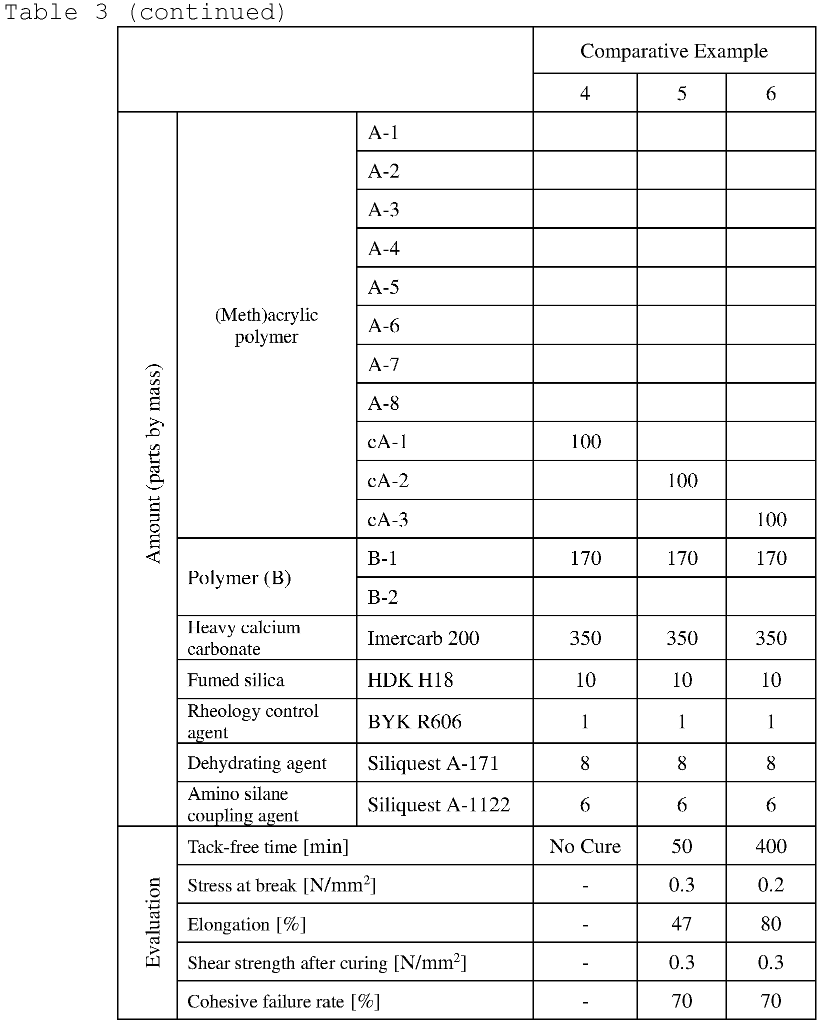

### [Example 16]

A curable composition was obtained by mixing 100 parts of the (meth)acrylic polymer (A-1), 28 parts of a plasticizer "Hexamoll DINCH" (manufactured by BASF), 70 parts of heavy calcium carbonate "Imercarb 2" (manufactured by IMERYS), 5 parts of the white pigment "Tipaque PFC105" (manufactured by Ishihara Sangyo Kaisha, Ltd.), and 3 parts of plastic balloons "Expancel 461 DE20d70" (manufactured by Nouryon), 0.5 parts of the ultraviolet absorber "Tinuvin 1130" (manufactured by BASF), 0.5 parts of the light stabilizer "Tinuvin 292" (manufactured by BASF), 6 parts of the dehydrating agent "Silquest A-171" (manufactured by MOMENTIVE), and 4 parts of 3-aminopropyltrimethoxysilane "KBM-903" (manufactured by Shin-Etsu Chemical Co., Ltd.) in the ARE-310 at a revolution speed of 2,000 rpm for 2 minutes.

Various evaluations were performed on the resulting curable composition.

### [Examples 17 to 22, Comparative Examples 7 to 9]

Curable compositions were obtained as in Example 13 except that compounding components were changed as shown in Table 4, and various evaluations were performed. Evaluation methods will be described below. In Example 18, N-(n-butyl)-3-aminopropyltrimethoxysilane "Dynasylan 1189" (manufactured by EVONIK) was used as an amino silane coupling agent.

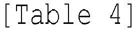

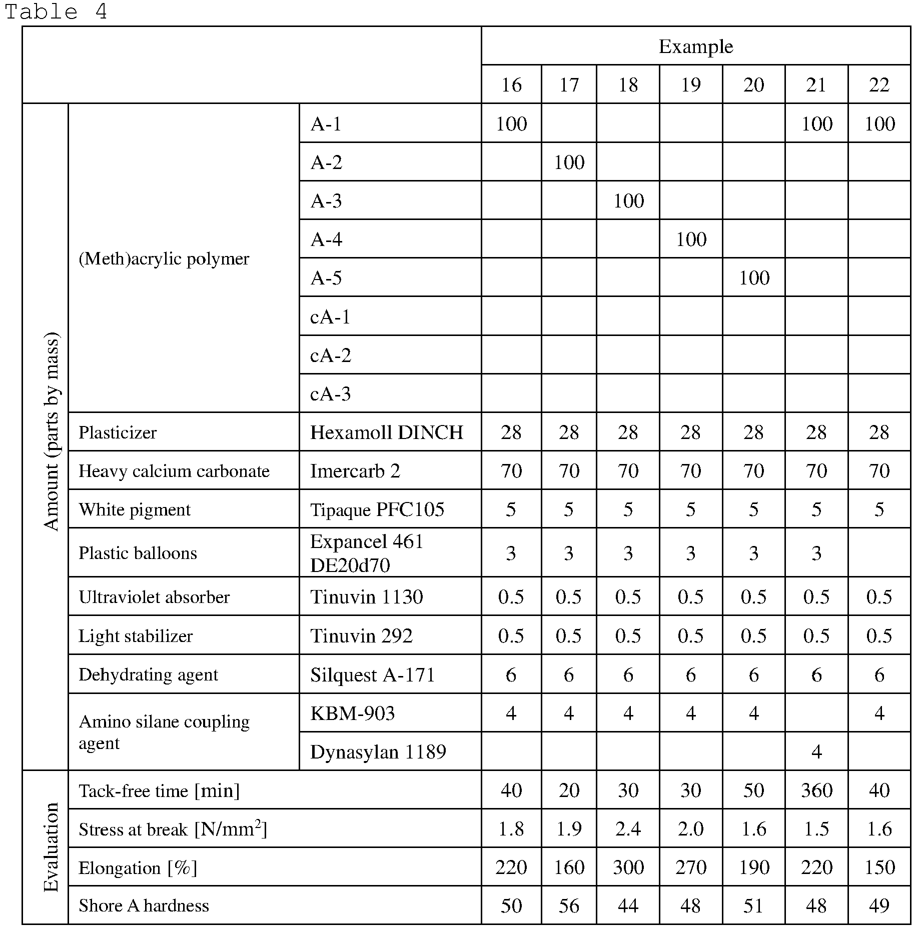

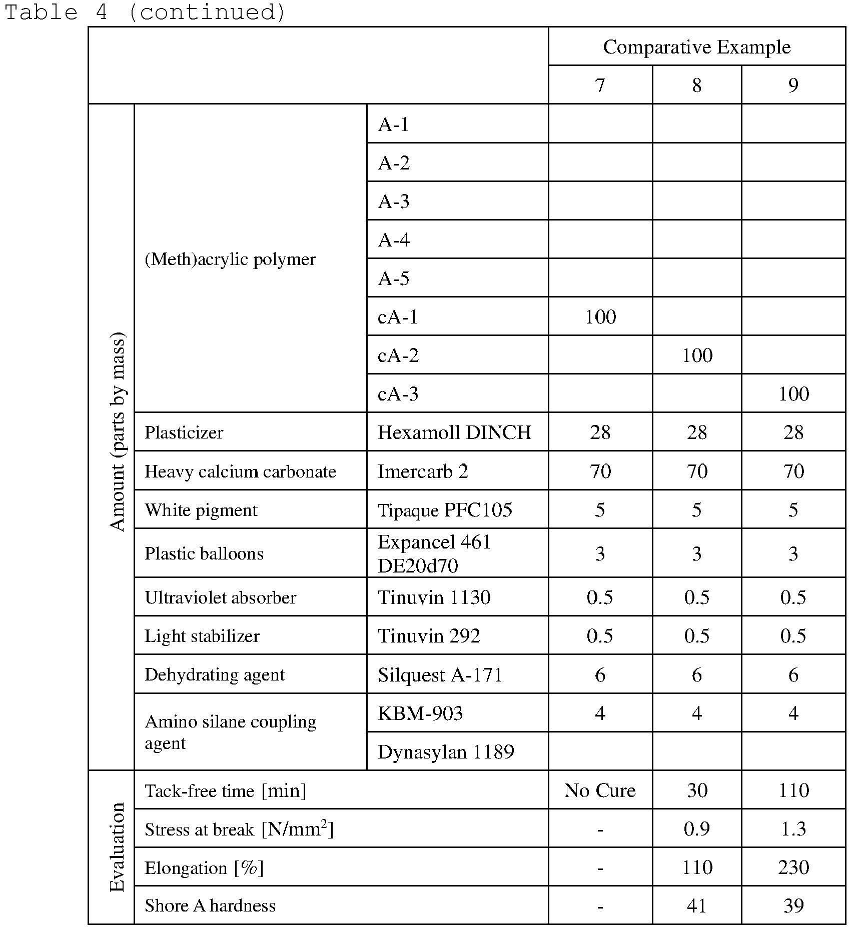

### [Example 23]

100 parts of the (meth)acrylic polymer (A-1), 90 parts of a tackifier resin "FTR 6100" (manufactured by Mitsui Chemicals, Inc.), and 1 part of an antioxidant "AO-80" (manufactured by ADEKA) were heated and mixed at 120°C in a kneader Labo Plastomill 4C150 (manufactured by Toyo Seiki Seisaku-Sho, Ltd.). Then, 6 parts of a dehydrating agent "Silquest A-171" (manufactured by MOMENTIVE) and 4 parts of N-(2-aminoethyl)-3-aminopropyltrimethoxysilane "Silquest A-1122" (manufactured by MOMENTIVE) were added and were heated and mixed at 120°C for 2 minutes to produce a curable composition.

Various evaluations were performed on the resulting curable composition.

### [Examples 24 to 27, Comparative Examples 10 to 12]

Curable compositions were obtained as in Example 20 except that compounding components were changed as shown in Table 5, and various evaluations were performed. Evaluation methods will be described below.

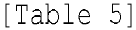

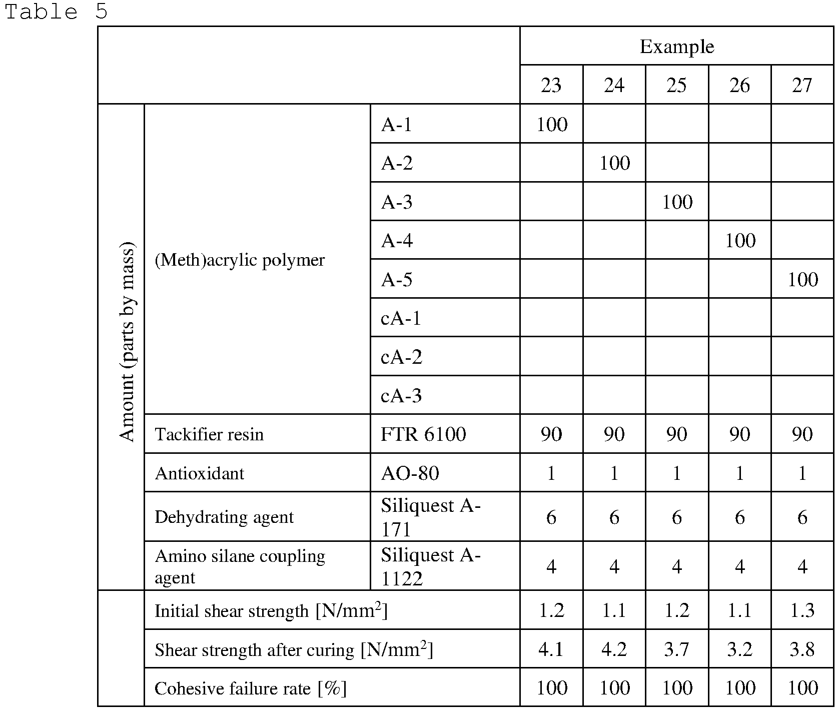

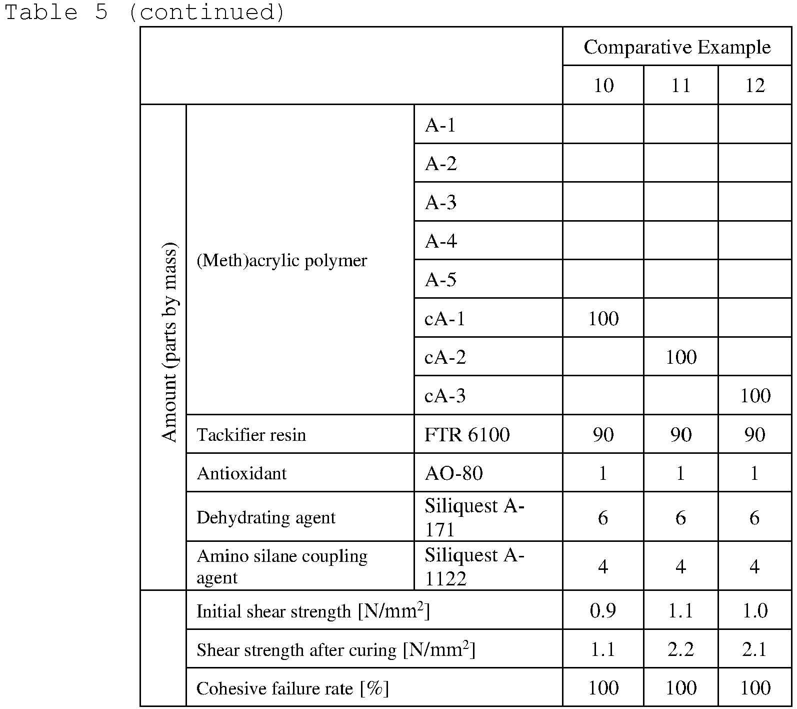

### [Evaluation methods for curable compositions]

Evaluation methods for properties of the curable compositions will be described below.

### <Tack-free time>

The curable compositions obtained in Examples and Comparative Examples were each applied with a doctor blade onto a Teflon (registered trademark) sheet so that the thickness of the cured product layer was 2 mm, and the time from the start of curing under the conditions of 23°C/50% RH to a point when a SUS spatula was brought into contact with and did not adhere to the composition (cured product) was measured.

### <Stress at break, elongation>

The curable compositions obtained in Examples and Comparative Examples were each applied with a doctor blade onto a Teflon (registered trademark) sheet so that the thickness of the cured product layer was 2 mm, and were cured under the conditions of 23°C/50% RH for 7 days. Then, the resulting cured product was punched out into a JIS No. 3 dumbbell shape, thus producing a sample. By performing a tensile test on the resulting sample in accordance with JIS K6251: 2010 (Rubber, vulcanized or thermoplastic - determination of tensile properties) under the conditions of a tensile speed of 200 mm/min and 23°C, stress at break and elongation were measured.

### <Shear strength, cohesive failure rate>

The curable compositions obtained in Examples and Comparative Examples were each applied to two aluminum test specimens (A1050, 1 mm in thickness) in accordance with JIS-K6850: 1999 (Adhesives - Determination of tensile lap - shear strength of rigid-to-rigid bonded assemblies). The test specimens were allowed to stand for 2 minutes and were then bonded together so that the thickness of the curable composition layer was 2 mm. The initial shear strength (maximum stress) before curing and the shear strength after curing under the conditions of 23°C/50% RH for 7 days were measured in accordance with JIS K6850: 1999 under the conditions of a tensile speed of 50 mm/min and 23°C using a universal tensile tester AG-X (manufactured by Shimadzu Corporation). Furthermore, the cohesive failure rate (the ratio of the cohesive failure area to the whole bonding area) was also measured.

### <Hardness>

The curable compositions obtained in Examples and Comparative Examples were each applied with a doctor blade onto a Teflon (registered trademark) sheet so that the thickness of the cured product layer was 2 mm, and were cured under the conditions of 23°C/50% RH for 7 days. The hardness of the resulting sample was measured with a type A durometer (manufactured by ASKER) in accordance with JIS K6253: 2012 (Rubber, vulcanized or thermoplastic - Determination of hardness -).

## Claims

1. A curable composition comprising: a (meth)acrylic polymer (A) which is a polymer of a polymerizable monomer component containing 20% by mass or more of a (meth)acrylic acid alkyl ester (a1) having an alkyl group with 8 to 12 carbon atoms,
the (meth)acrylic polymer (A) is a polymer that has a group represented by the formula (1), that contains 1,500 ppm or more of a silicon element, and that has a number average molecular weight (Mn) of more than 10,000,
Formula (1): -X-CH₂-SiR¹₃
[in the formula (1), R¹ is each independently an alkyl group with 1 to 20 carbon atoms, alkoxy group with 1 to 20 carbon atoms, or hydroxyl group, and at least one R¹ is the alkoxy group or hydroxyl group; X is a divalent group represented by -O-, -COO-, -S-, -N(R²)-, -CH(OH)-CH₂-O-, -O-CO-NH-, or - N(R²)-CO-N(R³)-, R² and R³ are each a hydrogen atom, hydrocarbon group, or halogenated hydrocarbon group, and R² and R³ may be the same or different].

2. The curable composition according to Claim 1, wherein the (meth)acrylic polymer (A) has a group represented by the formula (1) at least at a molecular chain end thereof.

3. The curable composition according to Claim 1 or 2, wherein the (meth)acrylic polymer (A) has a glass transition temperature of -20°C or lower.

4. The curable composition according to any one of Claims 1 to 3, wherein the (meth)acrylic polymer (A) is a polymer of a polymerizable monomer component containing 20% to 85% by mass of the (meth)acrylic acid alkyl ester (a1) having an alkyl group with 8 to 12 carbon atoms and 13% to 60% by mass of a (meth)acrylic acid alkyl ester (a2) having an alkyl group with 13 or more carbon atoms, and the alkyl group of the (meth)acrylic acid alkyl ester (a2) has a branched structure.

5. The curable composition according to any one of Claims 1 to 4, wherein the curable composition contains a silane coupling agent with a primary amino group in an amount of 0.1 to 10 parts by mass relative to 100 parts by mass of the (meth)acrylic polymer (A).

6. The curable composition according to any one of Claims 1 to 5, wherein the curable composition contains a tackifier resin with an acid value of 1 mgKOH/g or less in an amount of 1 to 900 parts by mass relative to 100 parts by mass of the (meth)acrylic polymer (A).

7. The curable composition according to any one of Claims 1 to 6, wherein the curable composition contains a (meth)acrylic polymer (B) with a number average molecular weight (Mn) of less than 10,000 in an amount of 10 to 900 parts by mass relative to 100 parts by mass of the (meth)acrylic polymer (A).

8. The curable composition according to any one of Claims 1 to 7, wherein the curable composition contains 10 to 900 parts by mass of a polymer (C) having a group represented by the formula (1) and having a polyether skeleton relative to 100 parts by mass of the (meth)acrylic polymer (A).

9. The curable composition according to any one of Claims 1 to 8, wherein the curable composition contains plastic balloons in an amount of 0.1 to 30 parts by mass relative to 100 parts by mass of the (meth)acrylic polymer (A).

10. A cured product obtained from the curable composition according to any one of Claims 1 to 9.
